# EUROPEAN PATENT APPLICATION

(11) **EP 4 606 696 A1**
(43) Date of publication of application: **27.08.2025**
(21) Application number: 25158655.8
(22) Date of filing: 18.02.2025
(51) Int. Cl.: B64C 1/06, B62D 21/15, F16F 7/00, B64C 27/00

(54) **DEVICE FOR ABSORPTION OF ENERGY BY COMPRESSION COMPRISING STAR-SHAPED ABSORPTION TUBES, AIRCRAFT INCLUDING AT LEAST ONE SUCH DEVICE**

(30) Priority: 23.02.2024 FR 2401773
(71) Applicant: Airbus Operations (S.A.S.), 31060 Toulouse Cedex 9 (FR)
(72) Inventor: SPAGNOLETTI, Jean-Louis, 31060 TOULOUSE (FR); NAM, See Ho Louis, 31060 TOULOUSE (FR)
(74) Representative: Cabinet Le Guen Maillet

(57) **Abstract**

The invention has for object a device for absorption of energy by compression including a plurality of absorption tubes (36) spaced from one another, each having a star shape cross section oriented in a direction of compression and junction walls (38) parallel to the direction of compression and connecting the absorption tubes (36) in such a manner as, with the latter, to delimit at least one cell (40). This solution enables a greater quantity of energy to be absorbed.

The invention also has for object an aircraft including at least one such device for absorption of energy.

## Description

The present invention relates to a device for absorption of energy by compression comprising star-shaped absorption tubes and an aircraft including at least one such device.

In accordance with one embodiment, a panel comprises first and second skins and a cellular structure between the first and second skins that comprises a plurality of tubes oriented perpendicularly to the first and second skins. This cellular structure has a honeycomb geometry and comprises a plurality of identical juxtaposed tubes of hexagonal section. The tubes generally have a small section, which confers on the panel high resistance to compression (forces perpendicular to the skins). Such panels are not used as modules for absorption of energy by compression.

In an embodiment described in the document US9.637.212, an aircraft comprises a module for absorption of energy by compression positioned between the skin of the fuselage and a fairing. The module comprises a cellular structure comprising a plurality of tubes oriented parallel to the skin of the fuselage and to the fairing. This cellular structure has a honeycomb geometry and comprises a plurality of juxtaposed identical tubes of hexagonal section oriented in a direction perpendicular to a direction of deformation. This embodiment is not able to absorb a large quantity of energy.

The documents EP-A-2505490, US-A-4593870 and US-A-4545172 disclose embodiments of the prior art.

The present invention aims to remedy some or all of the disadvantages of the prior art.

To this end, the invention has for object a device for absorption of energy by compression configured to be positioned between first and second elements and to be subjected to compression forces oriented in a direction of compression, said device for absorption of energy by compression including at least one module for absorption of energy by compression that comprises a plurality of absorption tubes oriented in the direction of compression, a first cross section and first and second ends.

According to the invention, the first cross section of the absorption tubes has a star shape. Additionally, the module for absorption of energy by compression comprises junction walls, parallel to the direction of compression, connecting the absorption tubes in such a manner as to delimit with the latter at least one cell.

Such a module for absorption of energy by compression enables absorption of a great quantity of energy.

In accordance with another feature, each cell has a second cross section larger than the first cross section of each absorption tube bordering the cell.

In accordance with another feature, the star shape comprises alternating circular arc protuberances and circular arc recesses.

In accordance with another feature, the protuberances of the same absorption tube are identical and have tops positioned on a first circle. Additionally, the recesses of the same absorption tube are identical and have bottoms positioned on a second circle concentric with the first circle, the protuberances and the recesses being regularly distributed around the absorption tube.

In accordance with another feature, each absorption tube comprises first and second half-tubes assembled and positioned on respective opposite sides of a plane of symmetry. Each half-tube comprises a central part including the protuberances and the recesses and first and second wings positioned on respective opposite sides of the central part, the first wings of the first and second half-tubes being positioned on respective opposite sides of the plane of symmetry, pressed one against the other and connected to one another, the second wings of the first and second half-tubes being positioned on respective opposite sides of the plane of symmetry, pressed one against the other and connected to one another.

In accordance with another feature, the module for absorption of energy by compression comprises a plurality of rows of absorption tubes, the rows being substantially parallel to one another and oriented in a first direction, each row comprising at least two absorption tubes spaced from one another and connected by at least one first junction wall positioned in a plane parallel to the first direction.

In accordance with another feature, for each row the plane of symmetry of each absorption tube coincides with the plane of the first and second junction walls.

In accordance with another feature, each row extends between first and second ends. Additionally, the module for absorption of energy by compression comprises a first end junction wall connecting the first ends of the various rows and a second end junction wall connecting the second ends of the various rows, the first and second end junction walls being substantially perpendicular to the first direction of the rows. In accordance with another feature, at least one absorption tube of at least one row is connected to the first or second end junction wall, each half-tube of the absorption tube connected to the first or second end junction wall including an extension pressed against the first or second end junction wall and connected to the latter.

In accordance with another feature, the module for absorption of energy by compression comprises at least one intermediate junction wall, substantially parallel to the first and second end junction walls, connecting two first junction walls of two rows.

In accordance with another feature, the module for absorption of energy by compression comprises first, second and third rows, the second row being positioned between the first and third rows. Additionally, the absorption tubes of the first, second and third rows have respective first, second and third heights, the second height being less than the first or third height.

In accordance with another feature, the module for absorption of energy by compression comprises at least one end plate, at least one junction wall being connected to said end plate.

In accordance with another feature, the end plate is spaced from the first or second end of all the absorption tubes of the module for absorption of energy by compression.

In accordance with another feature, the module for absorption of energy by compression comprises a first end plate connected to the first edges of the junction walls and a second end plate connected to the second edges of the junction walls.

In accordance with another feature, each end plate comprises at least one orifice for each absorption tube and at least one opening for each cell.

The invention also has for object an aircraft comprising at least one device for absorption of energy by compression having any of the above features.

Other features and advantages will emerge from the following description of the invention given by way of example only with reference to the appended drawings, in which:
Fig. 1 is a side view of an aircraft,
Fig. 2 is a perspective view of a lower part of an aircraft depicting one embodiment of the invention,
Fig. 3 is a longitudinal section of a lower part of an aircraft fuselage including modules for absorption of energy by compression in the non-deformed state and depicts one embodiment of the invention,
Fig. 4 is a longitudinal section of a lower part of an aircraft fuselage including modules for absorption of energy by compression in the deformed state and depicts one embodiment of the invention,
Fig. 5 is a perspective view of modules for absorption of energy by compression and depicts one embodiment of the invention, in the non-deformed state in part (A) and in the deformed state in part (B),
Fig. 6 is a perspective view of a module for absorption of energy by compression and depicts one embodiment of the invention,
Fig. 7 is a section on the plane P of the module for absorption of energy by compression seen in figure 6,
Fig. 8 is a perspective view of an absorption tube and depicts one embodiment of the invention,
Fig. 9 is a perspective view of a part of a module for absorption of energy by compression after a first assembly step and depicts one embodiment of the invention,
Fig. 10 is a perspective view of a part of a module for absorption of energy by compression after a second assembly step and depicts one embodiment of the invention,
Fig. 11 is a perspective view of a part of a module for absorption of energy by compression after a third assembly step and depicts one embodiment of the invention,
Fig. 12 is a perspective view of a first junction wall and depicts one embodiment of the invention,
Fig. 13 is a view from above of a junction zone connecting an absorption tube and an end junction wall and depicts one embodiment of the invention, and
Fig. 14 is a perspective view of end plates and depicts one embodiment of the invention.

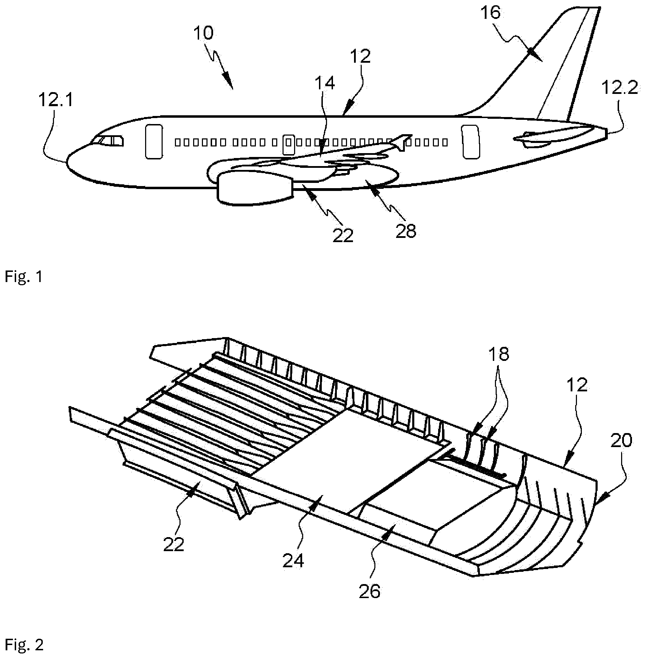

In an embodiment seen in figure 1, an aircraft 10 comprises a fuselage 12 that extends from a nose end 12.1 to a tail end 12.2, wings 14 positioned on either side of the fuselage 12 and a tail assembly 16 positioned at the level of the tail end 12.2 of the fuselage 12.

For the remainder of the description, a longitudinal direction is a direction parallel to a substantially horizontal longitudinal axis when the aircraft is on the ground that extends from the nose end 12.1 to the tail end 12.2. The aircraft 10 has a vertical longitudinal plane of symmetry containing the longitudinal axis.

The fuselage 12 also comprises a primary structure 18 consisting of formers and stringers and a skin 20 mounted on the primary structure 18. It also comprises a central wing box 22 and a landing gear well 24 offset aft relative to the central wing box 22. In one configuration, the fuselage 12 comprises at least one tank 26 offset aft relative to the landing gear well 24.

The aircraft 10 comprises a ventral fairing 28 that extends under the central wing box 22, the landing gear well 24 and the tank 26 and has a width substantially equal to that of the fuselage 12. At least in line with the tank 26, the ventral fairing 28 and the fuselage 12 (to be more precise the skin 20 of the fuselage 12) are spaced. In one configuration, the tank 26 is a structural tank integrated in part in the structure of the fuselage 12.

The aircraft 10 comprises at least one device for absorption of energy by compression, between the ventral fairing 28 and the fuselage 12 (to be more precise the skin 20 of the fuselage 12), that includes at least one module 30 for absorption of energy by compression between the ventral fairing 28 and the fuselage 12 (to be more precise the skin 20 of the fuselage 12). In one configuration, the aircraft 10 comprises at least one module 30 for absorption of energy by compression between the ventral fairing 28 and the tank 26, positioned under the latter. This configuration enables the addition of a supplementary tank 26 aft of the landing gear well 24, said tank 26 being protected by at least one module 30 for absorption of energy by compression in the event of vertical impact at the level of the ventral fairing 28. Consequently, the latter fairing is not necessarily designed to absorb such an impact and to protect the tank 26.

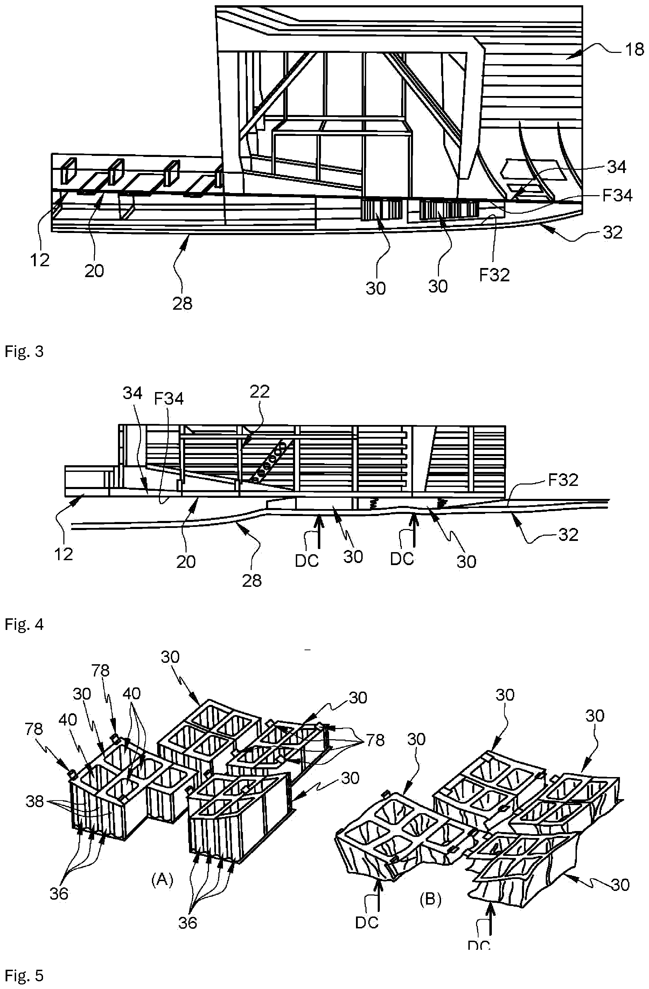

Of course, the invention is not limited to this arrangement. Thus the device for absorption of energy by compression could be positioned elsewhere on the aircraft. More generally, the device for absorption of energy by compression is configured to be positioned between first and second elements 32, 34, to be more precise between first and second contact surfaces F32, F34, and to be subjected to compression forces oriented in a direction of compression DC (seen in figure 4) intersecting the first and second elements 32, 34. In a first arrangement the first and second contact surfaces F32, F34 are substantially parallel to one another and substantially perpendicular to the direction of compression DC. In another arrangement the first and second contact surfaces F32, F34 are not parallel to one another and one of them is perpendicular to the direction of compression DC.

Each module 30 for absorption of energy by compression comprises a plurality of spaced absorption tubes 36 oriented in the direction of compression DC and each having a first cross section (perpendicular to the direction of compression DC) and junction walls 38, 38', 38" parallel to the direction of compression DC and connecting the absorption tubes 36 in such a manner as, with the latter, to delimit at least one cell 40 that has a second cross section (perpendicular to the direction of compression DC).

In one configuration the direction of compression DC is at a small angle of the order of 6° to the vertical direction.

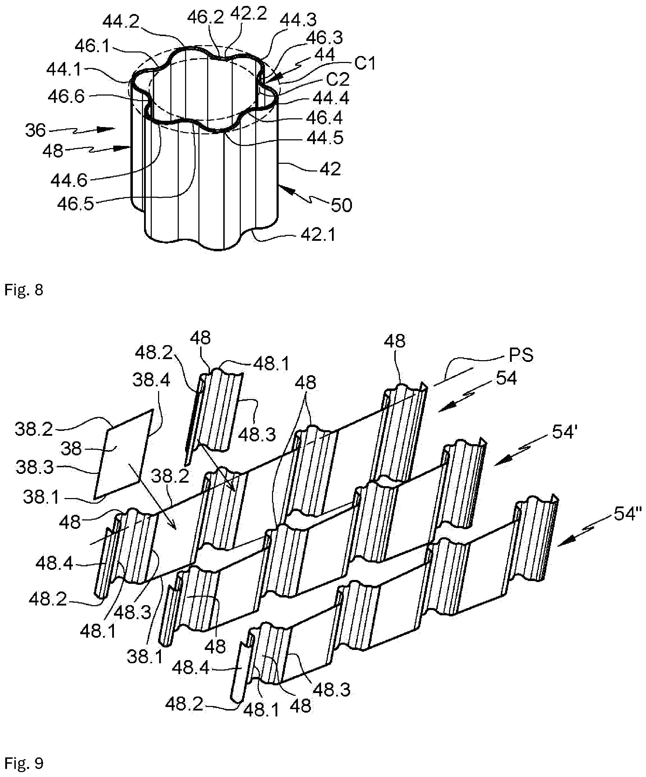

In an embodiment seen in figure 8, each absorption tube 36 has a lateral wall 42 and extends between first and second ends 42.1, 42.2 respectively oriented in the direction of the first and second elements 32, 34.

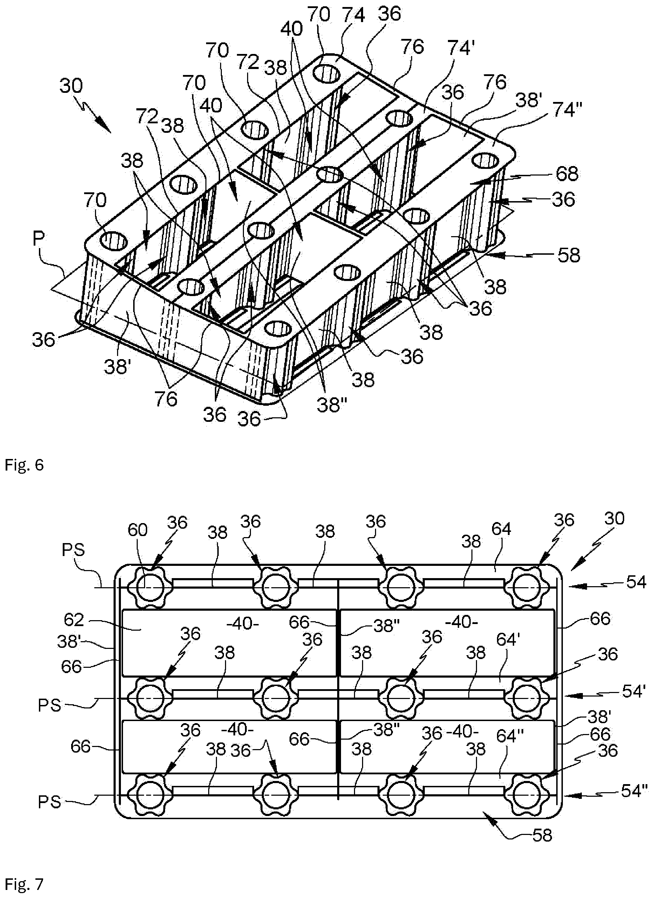

In an embodiment seen in figure 7, the absorption tubes 36 of the same module 30 for absorption of energy by compression all have the same cross section. Each absorption tube 36 has a constant cross section between its first and second ends 42.1, 42.2.

Alternatively, the absorption tubes 36 of the same module 30 for absorption of energy by compression could have different cross sections and/or evolve from one end to the other.

In an embodiment seen in figure 8, the first cross section of the absorption tubes 36 has a star shape 44 with alternating protuberances 44.1 to 44.6 and recesses 46.1 to 46.6.

In one configuration, the star shape 44 comprises six protuberances 44.1 to 44.6. Each protuberance 44.1, 44.6, as seen from above, traces out a circular arc. In a complementary manner, each recess 46.1 to 46.6 traces out, as seen from above, a circular arc. The protuberances 44.1 to 44.6 and the recesses therefore form a corrugated profile.

In one configuration, the protuberances 44.1 to 44.6 of an absorption tube 36 are all identical. In the same manner, the recesses are identical. The protuberances 44.1 to 44.6 and the recesses 46.1 to 46.6 are regularly distributed around the absorption tube 36. The tops of the protuberances 44.1 to 44.6 are positioned on a first circle C1. In a complementary manner, the bottoms of the recesses 46.1 to 46.6 are positioned on a second circle C2 concentric with the first circle C1.

In one embodiment, each absorption tube 36 has a height, corresponding to the distance separating the first and second ends 42.1, 42.2, between 160 and 300 mm inclusive. Each protuberance 44.1, 44.6 has a radius of curvature between 10 and 15 mm inclusive. To give an idea of an order of magnitude, each absorption tube 36 has a first cross section between 100 and 400 cm² inclusive.

Each absorption tube 36 has at least one plane of symmetry PS passing through two opposite protuberances.

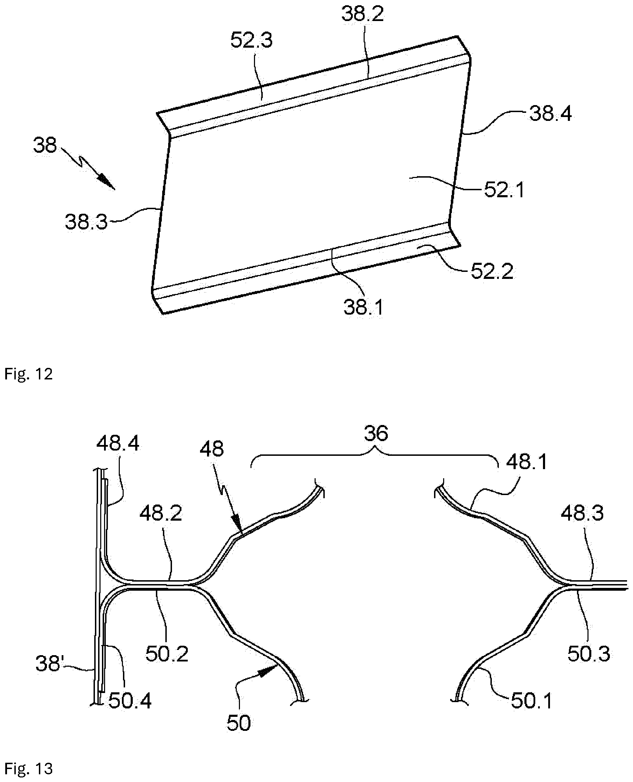

In a configuration seen in figures 9, 10 and 13, each absorption tube 36 is obtained by assembling first and second half-tubes 48, 50 positioned on respective opposite sides of the plane of symmetry PS. In an arrangement seen in figure 13, each half-tube 48, 50 comprises a corrugated central part 48.1, 50.1 including the protuberances 44.1 to 44.6 and the recesses 46.1 to 46.6 and first and second wings 48.2, 48.3, 50.2, 50.3 positioned on respective opposite sides of the central part 48.1, 50.1, the first wings 48.2, 50.2 of the first and second half-tubes 48, 50 being positioned on respective opposite sides of the plane of symmetry PS, pressed one against the other and connected to one another, the second wings 48.3, 50.3 of the first and second half-tubes 48, 50 being positioned on respective opposite sides of the plane of symmetry PS, pressed one against the other and connected to one another. In one assembly mode, the first and second wings 48.2, 50.2, 48.3, 50.3 are connected to one another by welding, riveting or any other means.

In one embodiment, each of the first and second half-tubes 48, 50 is obtained by bending, by pressing or any other suitable technique to obtain the protuberances 44.1 to 44.6 and the recesses 46.1 to 46.6.

In embodiments seen in particular in figures 9 and 12, each junction wall 38, 38', 38" extends between first and second edges 38.1, 38.2, 38.1', 38.2', 38.1", 38.2" and third and fourth edges 38.3, 38.4 that are, in the case of some of the junction walls 38, connected to absorption tubes 36 or to another junction wall 38. Two junction tubes 38 are therefore connected by at least one junction plate 38, 38', 38".

The junction walls 38 are generally plane. Alternatively, the junction walls 38 could be non-plane. In one embodiment, at least one junction wall 38 comprises a plane central part 52.1 and at least one wing 52.2 situated at the level of the first or second edge 38.1, 38.2 at an angle of 90° to the central part. In one configuration, the junction wall 38 comprises first and second wings 52.2, 52.3 respectively situated at the level of the first and second edges 38.1, 38.2 at an angle of 90° to the central part 52.1 and bent in opposite directions.

In an arrangement seen in figure 7, each module 30 for absorption of energy by compression comprises a plurality of rows 54, 54', 54" of absorption tubes 36, the rows 54, 54', 54" being substantially parallel to one another and oriented in a first direction, each row 54, 54', 54" comprising at least two absorption tubes 36 spaced from one another and connected by at least one junction wall 38 parallel to the first direction. In one embodiment, each module 30 for absorption of energy by compression comprises three rows 54, 54', 54" and each row 54, 54', 54" comprises four absorption tubes 36 connected two-by-two by three first junction walls 38 of the same length, positioned in the same plane parallel to the first direction. The plane of symmetry PS of each row 54, 54', 54" of each absorption tube 36 coincides with the plane of the first junction walls 38.

In one assembly mode, the absorption tubes 36 and the first junction walls 38 are joined by welding, riveting or any other assembly technique.

When the module 30 for absorption of energy by compression is integrated into an aircraft 10, the first direction is parallel to the longitudinal direction. The plane of the first junction walls 38 of the same row 54, 54', 54" contains the direction of compression DC.

Each row 54, 54', 54" extends between first and second ends. In a manner complementary to the first junction walls 38, the module 30 for absorption of energy by compression comprises a first end junction wall 38' connecting the first ends of the various rows 54, 54', 54" and a second end junction wall 38' connecting the second ends of the various rows 54, 54', 54", the first and second end junction walls 38' being substantially perpendicular to the first direction of the rows 54, 54', 54". In one configuration, at least one absorption tube 36 of at least one row 54, 54', 54" is connected to the first or second end junction wall 38'. Each row 54, 54', 54" comprises at each of its ends an absorption tube 36 connected to the first or second end junction wall 38'. In one embodiment shown in detail in figure 13, each half-tube 48, 50 of each absorption tube 36 connected to the first or second end junction wall 38' comprises, in line with its first or second wing 48.2, 50.2 oriented toward the first or second end junction wall 38', an extension 48.4, 50.4 at an angle of approximately 90° to the corresponding first or second wing 48.2, 50.2, pressed against the first or second end junction wall 38' and connected to the latter by welding, riveting or any other assembly technique.

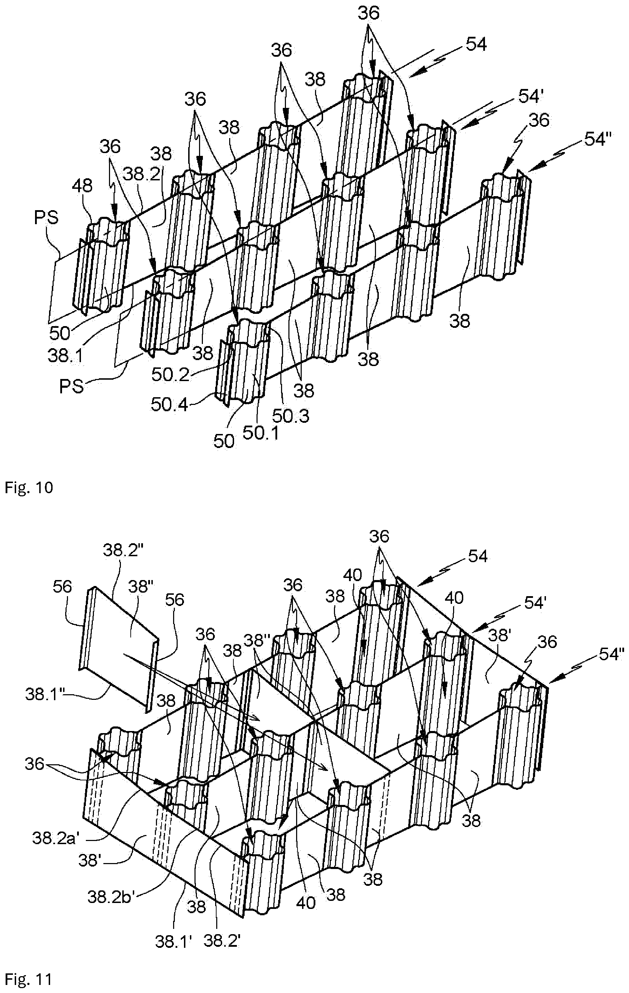

The module 30 for absorption of energy by compression comprises at least one intermediate junction wall 38" substantially parallel to the end junction walls 38' connecting two first junction walls 38 of two of the rows 54, 54', 54". In one configuration, the module 30 for absorption of energy by compression comprises two intermediate junction walls 38" connecting the three rows 54, 54', 54" two-by-two, positioned equidistantly from the first and second end junction walls 38'. In an embodiment seen in figure 11, each intermediate junction wall 38" comprises, at each of its ends, a rim 56 bent at 90°, pressed against a corresponding first junction wall 38 and connected to the latter by welding, riveting or any other assembly technique.

In one embodiment, for each row 54, 54', 54", the first ends 42.1 of the absorption tubes 36 and the first edges 38.1 of the junction walls 38 are coplanar. In a complementary manner, the second ends 42.2 of the absorption tubes 36 and the second edges 38.2 of the junction walls 38 are coplanar.

In one arrangement, for the same module 30 for absorption of energy by compression, the first ends 42.1 of the absorption tubes 36 and the first edges 38.1 of the first junction walls 38' of the various rows 54, 54', 54" are coplanar.

In one arrangement, the module 30 for absorption of energy by compression comprises first, second and third rows 54, 54', 54", the second row 54' being positioned between the first and third rows 54, 54". The absorption tubes 36 of the first row 54 have the same first height. The absorption tubes 36 of the second row 54' have the same second height. The absorption tubes 36 of the third row 54" have the same third height. The first and third heights are generally different. They could be equal. The second height is less than the first or third height.

The first and second end junction walls 38' comprise a first edge 38.1' that is coplanar with the first ends 42.1 of the absorption tubes 36 and the first edges 38.1 of the first junction walls 38 of the various rows 54, 54', 54" and a second edge 38.2' that includes a first segment 38.2a' connecting the second ends 42.2 of the absorption tubes 36 of the first and second rows 54, 54' and a second segment 38.2b' connecting the second ends 42.2 of the absorption tubes 36 of the second and third rows 54', 54".

Each intermediate junction wall 38" comprises a first edge 38.1" coplanar with the first ends 42.1 of the absorption tubes 36 and the first edges 38.1 of the first junction walls 38 of the various rows 54, 54', 54" and a second edge 38.2' connecting the second edges 38.2 of the second junction walls of the second row 54' and the first or third row 54, 54".

In the embodiment seen in figures 6 and 7, the cells 40 each have an approximately rectangular second cross section. Of course, the invention is not limited to this cross section of the cells 40. Thus the absorption tubes 36 and the junction walls 38 could be connected in such a manner as to delimit cells 40 with other cross sections, such as prismatic, square, rectangular, triangular or circular cross sections, for example, in such a manner as to form for example an orthogrid, isogrid or other type array. Furthermore, a module 30 for absorption of energy by compression could comprise only one cell 40.

In one configuration, for each module 30 for absorption of energy by compression, the second cross section of each cell 40 is larger than the first cross section of the absorption tubes 36. In one configuration, the second cross section of each cell 40 is at least twice the size of the first cross section of each absorption tube 36 bordering the cell 40. Such a module for absorption of energy by compression enables a greater quantity of energy to be absorbed.

To give an idea of an order of magnitude, each cell 40 has a second cross section between 60000 and 70000 mm² inclusive.

In one embodiment, the module 30 for absorption of energy by compression comprises at least one first end plate 58 in contact with the first end 42.1 of at least one absorption tube 36 and connected to the latter. In an embodiment seen in figure 7, the first end plate 58 is spaced from the first end 42.1 of all the absorption tubes 36. The first edge 38.1, 38.1', 38.1" of at least one junction wall 38, 38', 38" is connected to the first end plate 58 of the module 30 for absorption of energy by compression. The first edge 38.1, 38.1', 38.1" of all the junction walls 38, 38', 38" is preferably connected to the first end plate 58 of the module 30 for absorption of energy by compression. In one embodiment, the wing 52.2 of each junction wall 38 connected to the first end plate 58 is pressed against the latter and connected to the latter.

This first end plate 58 comprises at least one orifice 60 for each absorption tube 36 and at least one opening 62 for each cell 40. Each orifice 60 is circular and has a diameter less than or slightly less than that of the circle C2 of the star shape 44 of the absorption tubes 36. Each opening 62 is rectangular.

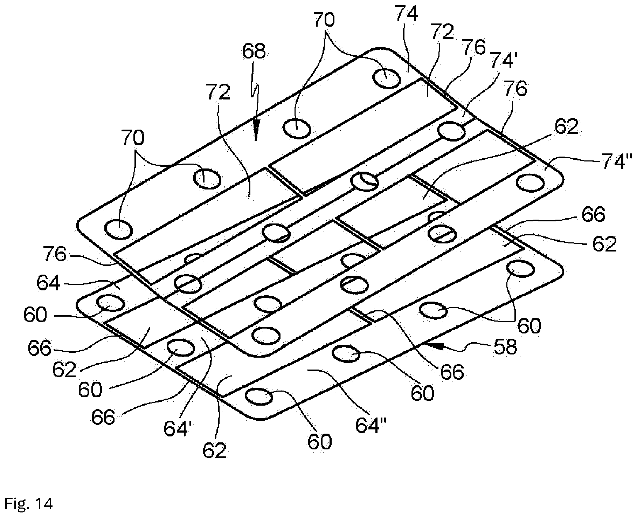

In a configuration seen in figure 14, the first end plate 58 has a rectangular perimeter with rounded corners and comprises, for each row 54, 54', 54", a rectangular zone 64, 64', 64" that has a width greater than or slightly greater than the diameter of the circle C1 of the star shape 44 of the absorption tubes 36 and, for each end or intermediate junction wall 38', 38", a narrow zone 66 connecting the rectangular zones 64, 64', 64". The first end plate 58 is plane.

In one embodiment, the module 30 for absorption of energy by compression comprises at least one second end plate 68 in contact with the second end 42.2 of at least one absorption tube 36 and connected to the latter. In an embodiment seen in figure 6, the second end plate 68 is spaced from the second end 42.2 of all the absorption tubes 36. The second edge 38.2, 38.2', 38.2" of at least one junction wall 38, 38', 38" is connected to the second end plate 68 of the module 30 for absorption of energy by compression. The second edge 38.2, 38.2', 38.2" of all the junction walls 38, 38', 38" is preferably connected to the second end plate 68 of the module 30 for absorption of energy by compression. In one embodiment, the wing 52.3 of each junction wall 38 connected to the second end plate 68 is pressed against the latter and connected to the latter.

This second end plate 68 comprises at least one orifice 70 for each absorption tube 36 and at least one opening 72 for each cell 40. Each orifice 70 is circular and has a diameter less than or slightly less than that of the circle C2 of the star shape 44 of the absorption tubes 36. Each opening 72 is rectangular.

In a configuration seen in figure 14, the second end plate 68 has a rectangular perimeter with rounded corners and comprises, for each row 54, 54', 54", a rectangular zone 74, 74', 74" that has a width greater than or slightly greater than the diameter of the circle C1 of the star shape 44 of the absorption tubes 36 and, for each end or intermediate junction wall 38', 38", a narrow zone 76 connecting the rectangular zones 74, 74', 74" to one another. The second end plate 68 comprises two flats inclined one relative to the other to follow the profile of the end and intermediate junction walls 38', 38".

Of course, the invention is not limited to these embodiments of the first and second end plates 58, 68. These end plates 58, 68 enable the area of contact between the module 30 for absorption of energy by compression and the first and second elements 32, 34 to be increased.

In one embodiment, the junction walls 38, 38', 38" and the absorption tubes 36 of a module 30 for absorption of energy by compression are made of aluminium alloy, in particular from sheets of aluminium alloy.

The dimensions and the material or materials of the absorption tubes 36 and the junction walls 38, 38', 38" are determined in such a manner as to obtain progressive crushing of the absorption tubes 36, favouring the absorption of energy, rather than buckling of the latter tubes.

In an embodiment seen in figures 9 to 11, an assembly method comprises a first assembly step, for each row 54, 54', 54", of the first half-tubes 48 and the first junction walls 38, as depicted in figure 9, a second step of assembly of the second half-tubes 50 in such a manner as to form the absorption tubes 36, as depicted in figure 10, a third step of assembling the rows 54, 54', 54" and the end and intermediate junction walls 38', 38", as depicted in figure 11, and finally a step of assembling the first and second end plates 58, 68 in such a manner as form the module 30 for absorption of energy by compression.

Of course, the invention is not limited to this embodiment of the assembly method. In one configuration, a module for absorption of energy by compression comprises a plurality of modules 30 for absorption of energy by compression positioned symmetrically relative to the vertical longitudinal plane of symmetry of the aircraft. In one embodiment, the device for absorption of energy by compression comprises at least one attachment system 78 connecting each module 30 for absorption of energy by compression to the first and/or second element 32, 34 between which said module 30 for absorption of energy by compression is positioned. In one configuration, this attachment system 78 is configured to enable rapid mounting or demounting of the module 30 for absorption of energy by compression.

In the case of an aircraft, each module 30 for absorption of energy by compression comprises a plurality of attachment systems 78 for connecting it to the fuselage 12 (to be more precise to the skin 20 of the fuselage 12) and/or to the central fairing 28. In one configuration, each module 30 for absorption of energy by compression is connected to only one of the first and second elements 32, 34. In one arrangement, the second element 34 being offset upward relative to the first element 32 (when the aircraft is on the ground), each module 30 for absorption of energy by compression is suspended under the second element 34, namely the fuselage 12 or the tank 26.

## Claims

1. Device for absorption of energy by compression configured to be positioned between first and second elements (32, 34) and to be subjected to compression forces oriented in a direction of compression (DC), said device for absorption of energy by compression including at least one module (30) for absorption of energy by compression that comprises a plurality of absorption tubes (36) oriented in the direction of compression (DC), a first cross section and first and second ends (42.1, 42.2), **characterised in that** the first cross section of the absorption tubes (36) has a star shape (44) and **in that** the module (30) for absorption of energy by compression comprises junction walls (38, 38', 38"), parallel to the direction of compression (DC), connecting the absorption tubes (36) in such a manner as to delimit with the latter at least one cell (40).

2. Device for absorption of energy by compression according to the preceding claim, **characterised in that** each cell (40) has a second cross section larger than the first cross section of each absorption tube (36) bordering the cell (40).

3. Device for absorption of energy by compression according to the preceding claim, **characterised in that** the star shape (44) comprises alternating circular arc protuberances (44.1 to 44.6) and circular arc recesses (46.1 to 46.6).

4. Device for absorption of energy by compression according to the preceding claim, **characterised in that** the protuberances (44.1 to 44.6) of the same absorption tube (36) are identical and have tops positioned on a first circle (C1) and **in that** the recesses (46.1 to 46.6) of the same absorption tube (36) are identical and have bottoms positioned on a second circle (C2) concentric with the first circle (C1), the protuberances (44.1 to 44.6) and the recesses (46.1 to 46.6) being regularly distributed around the absorption tube (36).

5. Device for absorption of energy by compression according to the preceding claim, **characterised in that** each absorption tube (36) comprises first and second half-tubes (48, 50) assembled and positioned on respective opposite sides of a plane of symmetry (PS) and **in that** each half-tube (48, 50) comprises a central part (48.1, 50.1) including the protuberances (44.1 to 44.6) and the recesses (46.1 to 46.6) and first and second wings (48.2, 48.3, 50.2, 50.3) positioned on respective opposite sides of the central part (48.1, 50.1), the first wings (48.2, 50.2) of the first and second half-tubes (48, 50) being positioned on respective opposite sides of the plane of symmetry (PS), pressed one against the other and connected to one another, the second wings (48.3, 50.3) of the first and second half-tubes (48, 50) being positioned on respective opposite sides of the plane of symmetry (PS), pressed one against the other and connected to one another.

6. Device for absorption of energy by compression according to the preceding claim, **characterised in that** the module (30) for absorption of energy by compression comprises a plurality of rows (54, 54', 54") of absorption tubes (36), the rows (54, 54', 54") being substantially parallel to one another and oriented in a first direction, each row (54, 54', 54") comprising at least two absorption tubes (36) spaced from one another and connected by at least one first junction wall (38) positioned in a plane parallel to the first direction.

7. Device for absorption of energy by compression according to claims 5 and 6, **characterised in that** for each row (54, 54', 54") the plane of symmetry (PS) of each absorption tube (36) coincides with the plane of the first and second junction walls (38).

8. Device for absorption of energy by compression according to either one of claims 6 or 7, **characterised in that** each row (54, 54', 54") extends between first and second ends and **in that** the module (30) for absorption of energy by compression comprises a first end junction wall (38') connecting the first ends of the various rows (54, 54', 54") and a second end junction wall (38') connecting the second ends of the various rows (54, 54', 54"), the first and second end junction walls (38') being substantially perpendicular to the first direction of the rows (54, 54', 54").

9. Device for absorption of energy by compression according to the preceding claim, **characterised in that** at least one absorption tube (36) of at least one row (54, 54', 54") is connected to the first or second end junction wall (38'), each half-tube (48, 50) of the absorption tube (36) connected to the first or second end junction wall (38') including an extension (48.4, 50.4) pressed against the first or second end junction wall (38') and connected to the latter.

10. Device for absorption of energy by compression according to either one of claims 8 or 9, **characterised in that** the module (30) for absorption of energy by compression comprises at least one intermediate junction wall (38"), substantially parallel to the first and second end junction walls (38'), connecting two first junction walls (38) of two rows (54, 54', 54").

11. Device for absorption of energy by compression according to any one of claims 6 to 10, **characterised in that** the module (30) for absorption of energy by compression comprises first, second and third rows (54, 54', 54"), the second row (54') being positioned between the first and third rows (54, 54") and **in that** the absorption tubes (36) of the first, second and third rows (54, 54', 54") have respective first, second and third heights, the second height being less than the first or third height.

12. Device for absorption of energy by compression according to any one of the preceding claims, **characterised in that** the module (30) for absorption of energy by compression comprises at least one end plate (58, 68), at least one junction wall (38, 38', 38") being connected to said end plate (58, 68).

13. Device for absorption of energy by compression according to the preceding claim, **characterised in that** the end plate (58, 68) is spaced from the first or second end (42.1) of all the absorption tubes (36) of the module (30) for absorption of energy by compression.

14. Device for absorption of energy by compression according to the preceding claim, **characterised in that** the module (30) for absorption of energy by compression comprises a first end plate (58) connected to the first edges (38.1, 38.1', 38.1") of the junction walls (38, 38', 38") and a second end plate (68) connected to the second edges (38.2, 38.2', 38.2") of the junction walls (38, 38', 38").

15. Device for absorption of energy by compression according to any one of claims 12 to 14, **characterised in that** each end plate (58, 68) comprises at least one orifice (60) for each absorption tube (36) and at least one opening (62) for each cell (40).

16. Aircraft comprising at least one device for absorption of energy by compression according to any one of the preceding claims.
